# EUROPEAN PATENT SPECIFICATION

(11) **EP 2 321 529 B1**
(45) Date of publication and mention of the grant of the patent: **06.06.2018**
(21) Application number: 09781087.3
(22) Date of filing: 26.07.2009
(51) Int. Cl.: F03D 3/06, F03D 3/00, F03B 17/06

(54) **A method for controlling a driving blade with respect to the wind or water direction, in particular in a wind and water engine with an axis perpendicular to the wind or water direction and a wind-driven or water-driven engine**
Verfahren zur Steuerung einer Antriebsschaufel bezüglich der Wind- oder Wasserrichtung, insbesondere in einer Wind- und Wasserkraftmaschine mit einer senkrecht zur Anströmrichtung verlaufenden Achse und Wind- oder Wasserkraftmaschine
Procédé permettant de commander une pale directrice par rapport au sens du vent ou du courant, en particulier dans un moteur éolien et un moteur à eau avec un axe perpendiculaire au sens du vent ou du courant et un moteur éolien ou un moteur à eau.

(30) Priority: 28.07.2008 PL 38576508
(43) Date of publication of application: 18.05.2011
(73) Proprietor: Energia Vawt Maciej Pawel Zurek, 95-100 Zgierz (PL)
(72) Inventor: ZUREK, Maciej, PL-95-100 Zgierz (PL)
(74) Representative: Kancelaria Eupatent.pl Sp. z.o.o
(86) International application number: PCT/EP2009/059622
(87) International publication number: WO 2010/012669

(56) References cited:
- DE-A1-102007 054 660
- DE-U1-202004 018 163
- DE-U1-202008 003 560
- JP-A- S5 259 243
- JP-A- S5 728 877
- US-A- 1 568 000
- US-A1- 2004 066 045

## Description

### TECHNICAL FIELD

The present invention relates to wind engines having an axis perpendicular to the wind direction with a driving blade controlled with respect to the wind direction, and to methods for controlling the driving blade with respect to the wind direction.

### BACKGROUND ART

A wind engine with an axis of rotation perpendicular to the wind direction may be useful for generating electric energy or directly as a drive for irrigation wells in areas remote from power grids.

There is known from a Polish patent 185069 a method for employing wind to drive a rotor in a wind engine. The rotor has blades located on the rotor in axes perpendicular to the wind direction, which may self-align with the wind direction. The pressure of wind force is transferred to the blades, which are rotatably fixed on arms, the rotation axes of which are placed at distances (s) and (s'). The ratio of the distances is 1:2 and in consecutive phases of rotor rotation the blades align freely under wind force in various directions. The engine has the blades arranged rotatably and eccentrically between the arms. Furthermore, on the inside surfaces of the arms, two invertible stopper buffers are embedded, which release or enable rotation of the blades under the pressure of the wind force.

A further prior art of DE202004018163 entitled "Rotor drive for wind and hydro power generation has the rotors mounted on a support frame with adjustable position to vary with flow strength and with geared drive to a drive shaft which directly drives the generator", discloses a rotor drive for generating power from wind or water/wave flow has rotors with radial vanes mounted in a support frame and held between the free ends of a fixed frame symmetrically positioned about a central drive shaft. The top of the movable frame has a gear train and a flow monitoring drive which adjusts the setting of the rotor to follow in flow direction. The bottom end of the drive shaft is extended to couple directly to a generator. The system can be turned through 90 deg. for placing in water flow.

Japanese patent document JPS5259243A discloses a forced movable blade wind mill, in which blades are guided by channel guides. The channel guides force pins located on the ends of the blades to move in a predetermined way, thereby enforcing a predetermined orientation of the blades.

Japanese patent document JPS5728877A discloses windmill for motive power in which a wind rudder is attached to the upper part of a main shaft and connected to the shafts of wind pressure reception plates through gear mechanisms to control the orientation of the plates by the rudder. The wind pressure reception plates are thus maintained in an desired state to receive the pressure of wind. As a result, the energy of wind can be utilized.

### DISCLOSURE OF INVENTION

The object of the invention is a method for controlling a driving blade with respect to the wind direction, in particular in a wind or water engine with an axis perpendicular to the wind direction, wherein in consecutive cycles of rotation of a frame of the engine, the driving blade connected via a distribution with a vane is set in a working cycle or in an idle cycle according to direction of its movement with respect to the wind direction, wherein the full rotation of the driving blade around its axis takes two rotations of the frame of the engine. The distribution mechanism is controlled by the vane. The distribution mechanism divides the rotation of the driving blade with respect to the vane to alternating cycles, the working cycle and the idle cycle.

Preferably, the frame of the engine rotates around an axis which coincides with the axis of rotation of the distribution mechanism.

In the working cycle the axis of rotation of the driving blade is locked still with the axis of rotation of the frame of the engine. In the idle cycle the axis of rotation of the driving blade and the axis of rotation of the vane are locked still.

Another object of the invention is a wind engine with an axis perpendicular to the wind direction with a driving blade controlled with respect to the wind direction, wherein on a rotatable frame there is mounted the driving blade connected via a distribution mechanism with a vane, wherein the distribution mechanism is arranged to set the driving blade to a working mode or to an idle mode, depending on the direction of movement of the driving blade with respect to the wind direction. The vane is configured to control the distribution mechanism.

Preferably, the axis of rotation of the frame of the engine and the axis of rotation of the distribution coincide. Preferably, the axis of rotation of the vane and the axis of rotation of the distribution coincide.

The distribution mechanism is configured to divide the rotation of the driving blade to alternating modes, the working mode and the idle mode, with respect to the vane.

The distribution mechanism, in order to set the driving blade into the working mode, is configured to lock still the axis of rotation of the driving blade and the axis of rotation of the frame of the engine. The distribution mechanism, in order to set the driving blade into the idle mode, may be configured to lock still the axis of rotation of the driving blade and the axis of rotation of the vane. The distribution mechanism comprises a mechanical cam. According to an example not part of the invention, the distribution mechanism comprises an electric relay.

### BRIEF DECRIPTION OF DRAWINGS

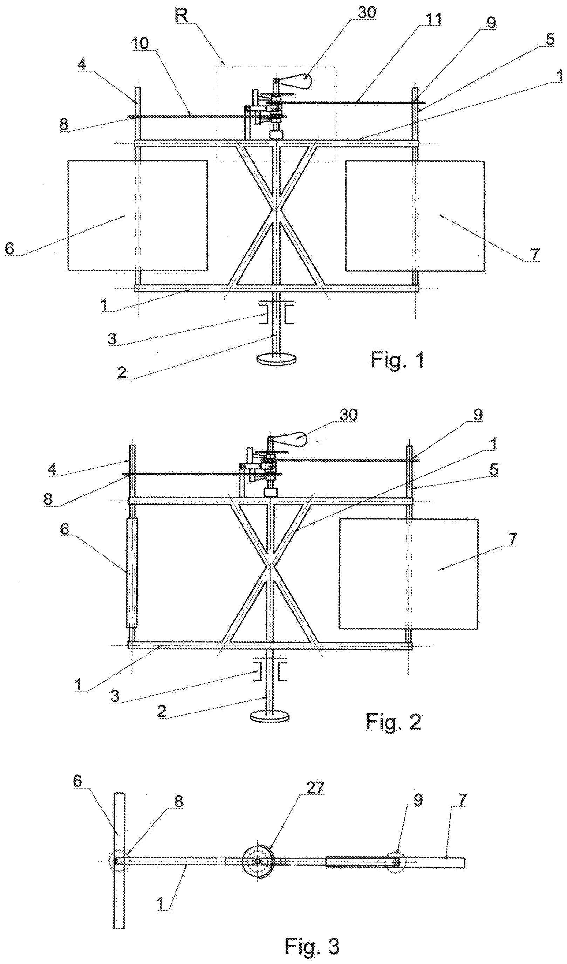

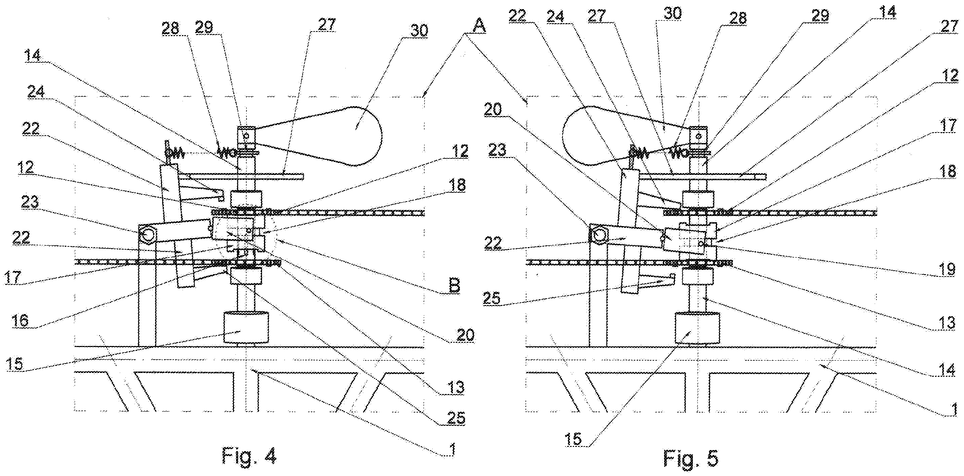

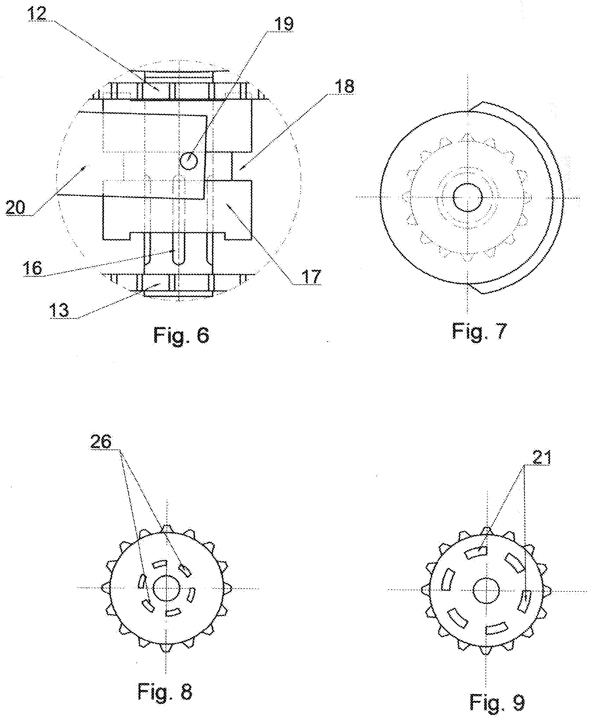

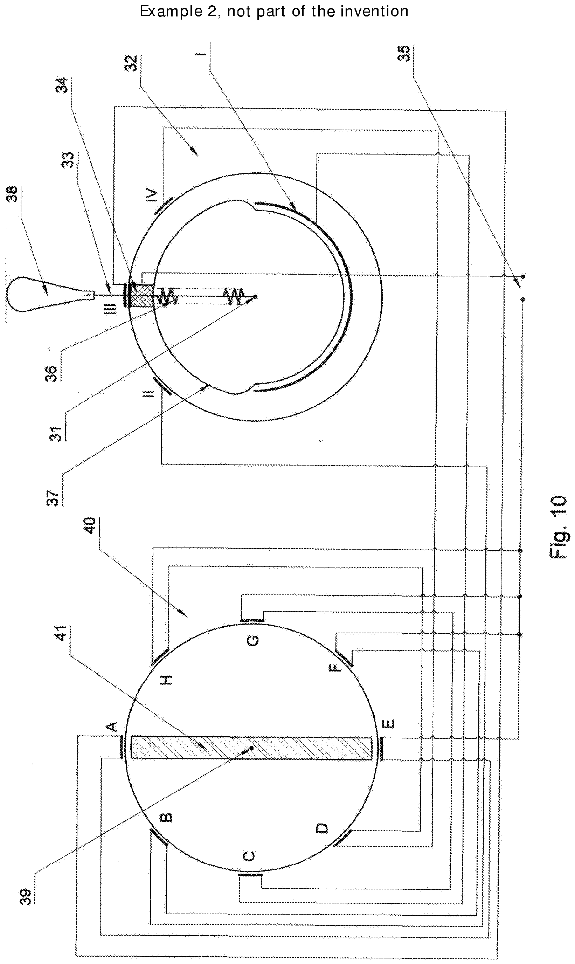

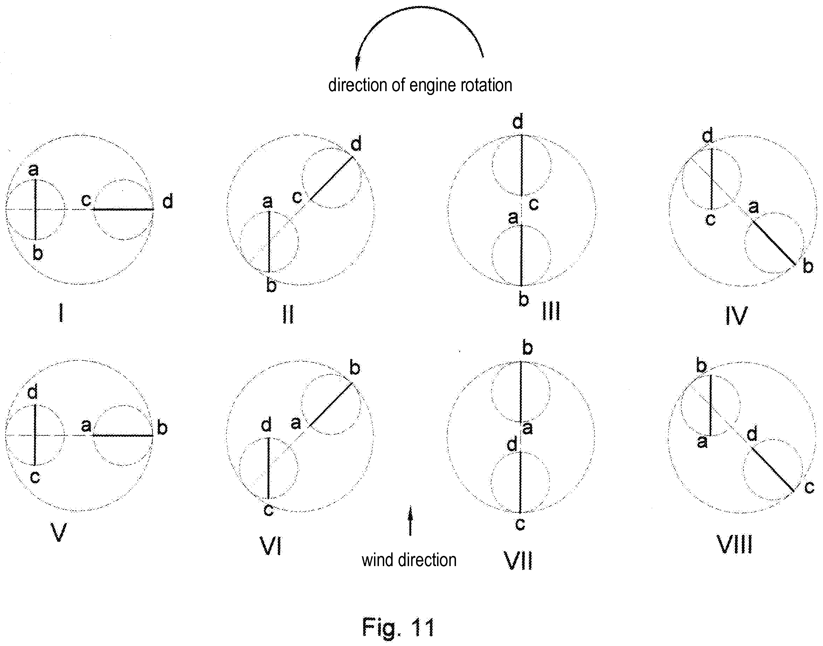

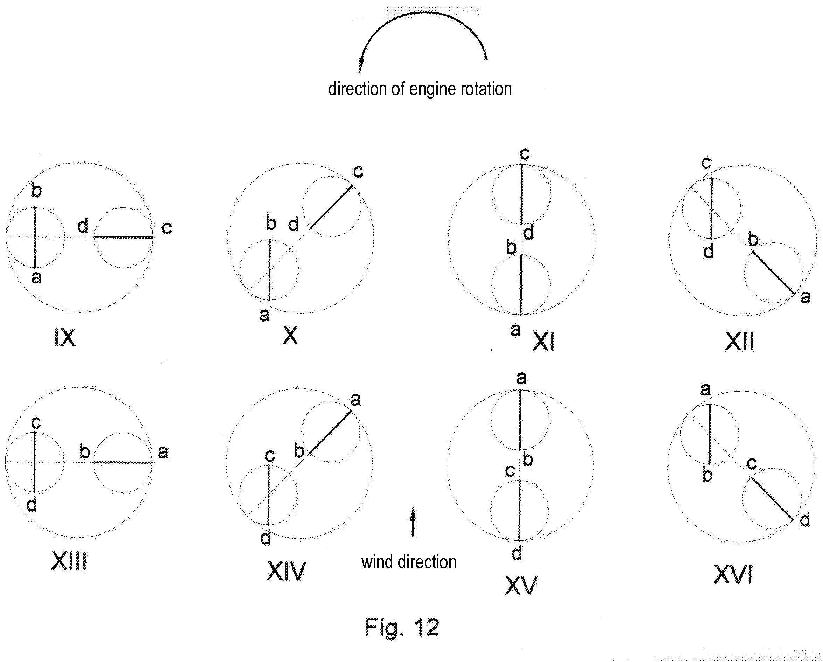

The object of the invention is shown in exemplary embodiments on a drawing, in which fig. 1 to fig. 9 show embodiment 1 of the invention utilizing mechanical control, wherein fig. 1 shows a side view of the wind engine, having blades set parallel to the frame axis, fig. 2 - a side view of a wind engine, where one blade is set parallel to the frame axis and a second blade is perpendicular to the frame axis, fig. 3 - a top view of the wind engine, fig. 4 - a distribution mechanism in the mechanical version, showing the engagement of a jaw clutch with a top gearwheel, fig. 5 - a distribution mechanism in the mechanical version, showing the engagement of a jaw clutch with a bottom gear wheel, fig. 6 - enlarged detail B of fig. 4, fig. 7 - a view of a cam, fig. 8 - a view of the external surface of gear wheels mounted on an axis, fig. 9 - a view of the internal surface of gear wheels mounted on an axis, fig. 10 - example 2, not part of the invention, utilizing electrical distribution, fig. 11 - a scheme of engine rotation in a cycle from 0° to 360°, where positions I and II show a situation, in which blade cd is a working blade and blade ab operates in idle run, in position III a change of coupling occurs, in positions IV, V and VI blade ab is the working blade and blade cd operates in idle run, in position VII a change of coupling occurs again and in position VIII blade cd is again the working blade and blade ab operates in idle run, wherein the blades are rotated by 180°, fig. 12 - a scheme of engine rotations in a cycle from 360° to 720°, in positions IX, X, XI, XII, XIII, XIV, XV and XVI the cycle of rotation of the wind engine is closed.

### MODES FOR CARRYING OUT THE INVENTION

### Example 1

A wind engine comprising a rectangular frame 1 fixed on a shaft 2 mounted in a bearing 3 in a way which enables rotational movement around its axis. At the sides of the frame, on shafts 4 and 5 there are mounted driving blades 6 and 7 in a way enabling rotational movement around the axes of the shafts. On the shafts 4 and 5 gear wheels 8 and 9 are mounted, connected by chains 10 and 11 with gearwheels 12 and 13 mounted on an axis 14 arranged in an axial bearing 15 on the shaft 2 in a way enabling independent rotational movement. The gear wheels 12 and 13 are mounted on the axis 14 via angle bearings, enabling free rotational movement, independent of the axis 14. On the axis 14, between the gear wheels 12 and 13 there is arranged, by means of a spline connection 16, a jaw clutch 17. On the perimeter of the jaw clutch 17 a channel 18 is made, in which pins 19, arranged at both sides of the guide 20 of the clutch, may move. On the internal surfaces of the gear wheels 12 and 13 there are openings 21, with which the teeth of the jaw clutch 17 may engage. At the external side of the gear wheels 12 and 13 there is, mounted inseparably on the frame 1, a toothed clutch 22, which may pivot on a joint 23. The toothed clutch 22 has a top tooth 24 and a bottom tooth 25, which may engage correspondingly with the gear wheel 12 or the gear wheel 13. On the external surfaces of the gear wheels 12 and 13 there are arranged projections 26 which may engage with the tooth 24 or 25 of the toothed clutch 22. The guide 20 is joint with the clutch 22. On the axis 14, above the gear wheel 12, there is rigidly mounted a cam 27. In the upper part of the clutch 22 there is mounted a tension spring 28, the second end of which is connected to a sliding ring 29, which slides in the channel on the axis 14. The cam 27 and the tension spring 28 set the location of the toothed clutch 22 in relation to the axis 14. To the top portion of the axis 14 there is rigidly fixed a vane 30, which positions the setting of the axis 14 with respect to the wind direction.

The operation of the wind engine is controlled by the axis 14, which by means of a directional wing 30 is positioned with respect to the wind direction. To the axis 14 there is rigidly connected a cam 27, which by meeting with its convex part the end of the clutch 22 deflects it away from the axis 14, causing engagement of the bottom tooth 25 of the clutch 22 with the internal surface of the bottom gear wheel 13. Simultaneously, by means of the guide 20 and pins 19, it lifts the clutch 17 to engage with the internal surface of the top gear wheel 12. In such position, the movement of the chain 10 is blocked, the driving blade 6 is coupled with the frame 1 and constitutes the working blade, whereas the driving blade 7 operates in idle run and is set parallel to the wind direction. After rotation of the frame 1 and the toothed clutch 22 mounted thereon by 180°, the convex part of the cam 27 moves away, the spring 28 pulls the end of the clutch 22 towards the axis 14, and consequently the top tooth 24 of the toothed clutch engages with the external surface of the top gear wheel 12 and, by means of the joint 20, the jaw clutch 17 is moved downwards and engages with the internal surface of the gear wheel 13. In this position the driving blade 7 is coupled with the frame 1 and constitutes the working blade, whereas the driving blade 6 is coupled with the axis 14 and is positioned perpendicular to the wind direction. After rotation of the frame by further 180°, the cam 27 again, by its convex part, moves the end of the clutch 22 away from the axis 14 and the coupling cycle repeats.

### Example 2, not part of the invention

To the frame 1, around its axis 31, there are fixed a relay 32 comprising contacts I, II, III and IV, and a rudder arm 33 mounted rotatably on the axis of rotation 31 of the frame. On the rudder arm 33 there is mounted a switch 34, connected with a direct current power clamp 35. The switch 34 consecutively contacts with the contacts I, II, III, IV and, by means of a tension spring 36, it is pushed towards a cam 37 in the range of 180° within the contacts II, III and IV, and towards the contact I within the remaining 180° range. On the end of the rudder arm 33 there is mounted a rudder 38, positioning the rudder arm 33 and the switch 34 with respect to the wind direction. To the end of the frame 1 around the axis 39 of the shaft 4 or 5 there is mounted a relay 40 having at its perimeter coils A, B, C, D, E, F, G and H. On the axis 39 of the shaft there is mounted a rotor 41 made of ferromagnetic material, rigidly connected with one of the blades 6, 7. The relay coils 40, situated opposite to each other, are connected with each other and with one of the contacts of the relay 32, and correspondingly, coils C and G are connected with contact I, coils B and F are connected with contact II, coils A and E are connected with contact III.

The rudder 38 sets the rudder arm 33 together with the switch 34 mounted thereon at a direction parallel to the wind direction. The frame 1, together with the relay 32 fixed to it, rotates around the axis 31, which causes displacement of contacts II, III, IV and contact I with respect to the switch 34. The switch 34 connects consecutively the contacts II, III, IV and the contact I, applying voltage to the coils, consecutively B and F, A and E, and H and D. The rotor 41 and the wing 6 or 7 connected with it take a position corresponding to the coils, to which voltage is applied at the moment. Consequently, during rotation of the switch 34 with the contact I, voltage is applied to coils C and G, the blade 6 or 7 is in a working mode, set perpendicularly to the wind direction. At the moment of contact of switch 34 with the contacts, consecutively II, III and IV, voltage is applied consecutively to coils B and F, A and E, and H and D, the blade 6 or 7 is in an idle mode keeping its position approximately parallel to the wind direction.

The wind engine according to the invention has a high efficiency due to lowering of the wind drag achieved by using a directional blade and a distribution coupled with it.

## Claims

1. A method for controlling a driving blade (6, 7) with respect to the a direction of wind or water, in particular in a wind engine or in a water engine, respectively, the engine having an axis perpendicular to the direction of wind or water, **characterized in that** in consecutive cycles of rotation of a frame (1) of the engine, the driving blade (6, 7) connected via a distribution mechanism (R) with a vane (30, 38) is set, according to a direction of the movement of the driving blade (6, 7) with respect to the direction of wind or water, in a working cycle in which an axis (4, 5) of rotation of the driving blade (6, 7) is locked still with an axis (2) of rotation of the frame (1) of the engine, or in an idle cycle in which the axis (4, 5) of rotation of the driving blade (6, 7) and an axis (14) of rotation of the vane (30, 38) are locked still, wherein a full rotation of the driving blade (6, 7) around the axis (4, 5) of rotation of the driving blade (6, 7) takes two rotations of the frame (1) of the engine, wherein an alternate locking of the axis (4, 5) of rotation of the driving blade (6, 7) with the axis (2) of rotation of the frame (1) or with the axis (14) of rotation of the vane (30, 38) is effected by means of a coupling element (22, 34, 36) that is rotatably fixed to the frame (1), wherein the operation of the coupling element (22, 34, 36) is governed by engagement of the coupling element (22, 34, 36) with a cam (27, 37) that is fixed to the frame (1).

2. The method according to claim 1, **characterized in that** the distribution mechanism (R) is controlled by the vane (30, 38).

3. The method according to claim 2, **characterized in that** the distribution mechanism (R) divides the rotation of the driving blade (6, 7) with respect to the vane (30, 38) to alternating cycles: the working cycle and the idle cycle.

4. The method according to claim 1, **characterized in that** the frame (1) of the engine rotates around an axis (2) which coincides with the axis (2) of rotation of the distribution mechanism (R).

5. A wind-driven or water-driven engine with an axis perpendicular to a direction of wind or water , the engine having a driving blade (6, 7) controlled with respect to the direction of wind or water, **characterized in that** the driving blade (6, 7) is mounted on a rotatable frame (1), and the driving blade (6, 7) is connected via a distribution mechanism (R) with a vane (30, 38), wherein the distribution mechanism (R) is arranged to set the driving blade (6, 7), depending on a direction of movement of the driving blade (6, 7) with respect to the direction of wind or water, to a working mode in which an axis (4, 5) of rotation of the driving blade (6, 7) and an axis (2) of rotation of the frame (1) of the engine are locked still, or to an idle mode, in which the axis (4, 5) of rotation of the driving blade (6, 7) and the axis (14) of rotation of the vane (30, 38) are locked still, wherein the distribution mechanism (R) comprises a coupling element (22, 34, 36) rotatably fixed to the frame (1) and cooperating with a cam (27, 37) fixed to the frame (1).

6. The engine according to claim 5, **characterized in that** the vane (30, 38) is configured to control the distribution mechanism (R).

7. The engine according to claim 5, **characterized in that** the axis of rotation of the frame (1) of the engine and the axis of rotation of the distribution mechanism (R) coincide.

8. The engine according to claim 5, **characterized in that** the axis of rotation of the vane (30, 38) and the axis of rotation of the distribution mechanism (R) coincide.

9. The engine according to claim 5, **characterized in that** the distribution mechanism (R) is configured to divide the rotation of the driving blade (6, 7) to alternating modes: the working mode and the idle mode, with respect to the vane (30, 38).

10. The engine according to claim 5, **characterized in that** the distribution mechanism (R) comprises a mechanical cam (27).

11. The engine according to claim 5, **characterized in that** the distribution mechanism (R) comprises an electric relay (32).

## Patentansprüche

1. Verfahren zum Steuern eines Antriebsflügels (6, 7) bezüglich einer Wind- oder Wasserrichtung, insbesondere jeweils in einem Windmotor oder in einem Wassermotor, wobei der Motor eine Achse senkrecht zu der Wind- oder Wasserrichtung aufweist, **dadurch gekennzeichnet, dass** in aufeinanderfolgenden Drehzyklen eines Motorrahmens (1) der mittels eines Verteilungsmechanismus (R) mit einer Schaufel (30, 38) verbundene Antriebsflügel (6, 7) gemäß einer Bewegungsrichtung des Antriebsflügels (6, 7) bezüglich der Wind- oder Wasserrichtung in einem Arbeitszyklus, in dem eine Drehachse (4, 5) des Antriebsflügels (6, 7) noch mit einer Drehachse (2) des Motorrahmens (1) verriegelt wird, oder in einem Leerlaufzyklus, in dem die Drehachse (4, 5) des Antriebsflügels (6, 7) und eine Drehachse (14) der Schaufel (30, 38) noch verriegelt werden, eingestellt wird, wobei eine vollständige Drehung des Antriebsflügels (6, 7) um die Drehachse (4, 5) des Antriebsflügels (6, 7) zwei Drehungen des Motorrahmens (1) beansprucht, wobei ein abwechselndes Sperren der Drehachse (4, 5) des Antriebsflügels (6, 7) mit der Drehachse (2) des Rahmens (1) oder mit der Drehachse (14) der Schaufel (30, 38) mittels eines Verbindungselementes (22, 34, 36) bewirkt wird, das drehbar an dem Rahmen (1) befestigt wird, wobei der Betrieb des Verbindungselements (22, 34, 36) durch ein Einrasten des Verbindungselements (22, 34, 36) mit einem Nocken (27, 37) geleitet wird, der an dem Rahmen (1) befestigt wird.

2. Verfahren nach Anspruch 1, **dadurch gekennzeichnet, dass** der Verteilungsmechanismus (R) durch die Schaufel (30, 38) gesteuert wird.

3. Verfahren nach Anspruch 2, **dadurch gekennzeichnet, dass** der Verteilungsmechanismus (R) die Drehung des Antriebsflügels (6, 7) bezüglich der Schaufel (30, 38) in wechselnde Zyklen unterteilt: in den Arbeitszyklus und den Leerlaufzyklus.

4. Verfahren nach Anspruch 1, **dadurch gekennzeichnet, dass** sich der Rahmen (1) des Motors um eine Achse (2) dreht, die mit der Drehachse (2) des Verteilungsmechanismus (R) übereinstimmt.

5. Windangetriebener oder wasserangetriebener Motor mit einer Achse senkrecht zu einer Wind- oder Wasserrichtung, wobei der Motor einen bezüglich der Wind- oder Wasserrichtung gesteuerten Antriebsflügel (6, 7) aufweist, **dadurch gekennzeichnet, dass** der Antriebsflügel (6, 7) auf einem drehbaren Rahmen (1) befestigt wird, und der Antriebsflügel (6, 7) mittels eines Verteilungsmechanismus (R) mit einer Schaufel (30, 38) verbunden wird, wobei der Verteilungsmechanismus (R) angeordnet wird, um den Antriebsflügel (6, 7) abhängig von einer Bewegungsrichtung des Antriebsflügels (6, 7) bezüglich der Wind- oder Wasserrichtung auf einen Arbeitsmodus, in dem eine Drehachse (4, 5) des Antriebsflügels (6, 7) und eine Drehachse (2) des Rahmens (1) des Motors noch verriegelt werden, oder auf einen Leerlaufmodus, in dem die Drehachse (4, 5) des Antriebsflügels (6, 7) und die Drehachse (14) der Schaufel (30, 38) noch verriegelt werden, einzustellen, wobei der Verteilungsmechanismus (R) ein an dem Rahmen (1) drehbar befestigtes Verbindungselement (22, 34, 36) umfasst und mit einem an dem Rahmen (1) befestigten Nocken (27, 37) zusammenwirkt.

6. Motor nach Anspruch 5, **dadurch gekennzeichnet, dass** die Schaufel (30, 38) konfiguriert wird, um den Verteilungsmechanismus (R) zu steuern.

7. Motor nach Anspruch 5, **dadurch gekennzeichnet, dass** die Drehachse des Motorrahmens (1) und die Drehachse des Verteilungsmechanismus (R) übereinstimmen.

8. Motor nach Anspruch 5, **dadurch gekennzeichnet, dass** die Drehachse der Schaufel (30, 38) und die Drehachse des Verteilungsmechanismus (R) übereinstimmen.

9. Motor nach Anspruch 5, **dadurch gekennzeichnet, dass** der Verteilungsmechanismus (R) konfiguriert wird, um die Drehung des Antriebsflügels (6, 7) in wechselnde Modi zu unterteilen: bezüglich der Schaufel (30, 38) in den Arbeitsmodus und den Leerlaufmodus.

10. Motor nach Anspruch 5, **dadurch gekennzeichnet, dass** der Verteilungsmechanismus (R) einen mechanischen Nocken (27) umfasst.

11. Motor nach Anspruch 5, **dadurch gekennzeichnet, dass** der Verteilungsmechanismus (R) ein elektrisches Relais (32) umfasst.

## Revendications

1. Procédé permettant de commander une pale directrice (6, 7) par rapport au sens du vent ou de l'eau, en particulier dans un moteur éolien ou dans un moteur à eau, respectivement, le moteur possédant un axe perpendiculaire au sens du vent ou l'eau, **caractérisé en ce que** dans des cycles consécutifs de rotation d'un châssis (1) du moteur, la pale directrice (6, 7) reliée par l'intermédiaire d'un mécanisme de distribution (R) à une girouette (30, 38) étant réglée, selon le sens du mouvement de la pale directrice (6, 7) par rapport au sens du vent ou de l'eau, dans un cycle de travail dans lequel un axe (4, 5) de rotation de la pale directrice (6, 7) est verrouillé de manière fixe avec un axe (2) de rotation du châssis (1) du moteur, ou dans un cycle d'attente dans lequel l'axe (4, 5) de rotation de la pale directrice (6, 7) et un axe (14) de rotation de la girouette (30, 38) sont verrouillées de manière fixe, une rotation complète de la pale directrice (6, 7) autour de l'axe (4, 5) de rotation de la pale directrice (6, 7) demandant deux rotations du châssis (1) du moteur, un autre verrouillage de l'axe (4, 5) de rotation de la pale directrice (6, 7) avec l'axe (2) de rotation du châssis (1) ou avec l'axe (14) de rotation de la girouette (30, 38) s'effectuant au moyen d'un élément de couplage (22,34,36) qui est fixé rotativement au châssis (1), ledit fonctionnement de l'élément de couplage (22, 34, 36) étant régi par la mise en prise de l'élément de couplage (22, 34, 36) avec une came (27, 37) qui est fixée au châssis (1).

2. Procédé selon la revendication 1, **caractérisé en ce que** le mécanisme de distribution (R) est commandé par la girouette (30, 38).

3. Procédé selon la revendication 2, **caractérisé en ce que** le mécanisme de distribution (R) divise la rotation de la pale directrice (6, 7) par rapport à la girouette (30, 38) pour l'alternance des cycles : le cycle de travail et le cycle d'attente.

4. Procédé selon la revendication 1, **caractérisé en ce que** le châssis (1) du moteur tourne autour d'un axe (2) qui coïncide avec l'axe (2) de rotation du mécanisme de distribution (R).

5. Moteur entraîné par le vent ou par l'eau avec un axe perpendiculaire au sens du vent ou de l'eau, ledit moteur possédant une pale directrice (6, 7) commandée par rapport au sens du vent ou de l'eau, **caractérisé en ce que** la pale directrice (6, 7) est montée sur un châssis rotatif (1) et la pale directrice (6, 7) étant reliée par l'intermédiaire d'un mécanisme de distribution (R) à une girouette (30, 38), ledit mécanisme de distribution (R) étant agencé pour régler la pale directrice (6, 7) en fonction du mouvement de la pale directrice (6, 7) par rapport au sens du vent ou de l'eau, à un mode de travail dans lequel un axe (4, 5) de rotation de la pale directrice (6, 7) et un axe (2) de rotation du châssis (1) du moteur sont verrouillés de manière fixe, ou à un mode d'attente, dans lequel l'axe (4, 5) de rotation de la pale directrice (6, 7) et l'axe (14) de rotation de la girouette (30, 38) sont verrouillés de manière fixe, ledit mécanisme de distribution (R) comprenant un élément de couplage (22, 34, 36) fixé rotativement au châssis (1) et coopérant avec une came (27, 37) fixée au châssis (1).

6. Moteur selon la revendication 5, **caractérisé en ce que** la girouette (30, 38) est conçue pour commander le mécanisme de distribution (R).

7. Moteur selon la revendication 5, **caractérisé en ce que** l'axe de rotation du châssis (1) du moteur et l'axe de rotation du mécanisme de distribution (R) coïncident.

8. Moteur selon la revendication 5, **caractérisé en ce que** l'axe de rotation de la girouette (30, 38) et l'axe de rotation du mécanisme de distribution (R) coïncident.

9. Moteur selon la revendication 5, **caractérisé en ce que** le mécanisme de distribution (R) est conçu pour diviser la rotation de la pale directrice (6, 7) en des modes alternants : le mode de travail et le mode d'attente, par rapport à la girouette (30, 38).

10. Moteur selon la revendication 5, **caractérisé en ce que** le mécanisme de distribution (R) comprend une came mécanique (27).

11. Moteur selon la revendication 5, **caractérisé en ce que** le mécanisme de distribution (R) comprend un relais électrique (32).
